(19) Europäisches Patentamt
European Patent Office
Office européen des brevets

(11) **EP 4 300 433 A1**

(12) **EUROPEAN PATENT APPLICATION**

(43) Date of publication:
**03.01.2024 Bulletin 2024/01**

(21) Application number: **22182378.4**

(22) Date of filing: **30.06.2022**

(51) International Patent Classification (IPC):
**G06V 10/764** (2022.01)  **G06V 10/82** (2022.01)
**G06V 10/22** (2022.01)  **G06T 7/00** (2017.01)

(52) Cooperative Patent Classification (CPC):
**G06V 10/764; G06T 7/0012; G06V 10/235;
G06V 10/82;** G06T 2207/20084; G06T 2207/20101;
G06T 2207/30004; G06V 2201/031

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Healthcare GmbH
91052 Erlangen (DE)**

(72) Inventors:
• **YEREBAKAN, Halid
Carmel, IN, 46033 (US)**

• **YEREBKO, Anna
Paoli, PA, 19301 (US)**
• **SHINAGAWA, Yoshihisa
Downingtown, PA, 19335 (US)**
• **HERMOSILLO VALADEZ, Gerardo
West Chester, PA, 19382 (US)**

(74) Representative: **Horn Kleimann Waitzhofer
Schmid-Dreyer
Patent- und Rechtsanwälte PartG mbB
Theresienhöhe 12
80339 München (DE)**

(54) **METHOD FOR IDENTIFYING A TYPE OF ORGAN IN A VOLUMETRIC MEDICAL IMAGE**

(57)     A method, device and system for identifying a type of organ (309) in a volumetric medical image (305). In one aspect, the method comprises:
a) receiving a volumetric medical image (305), the volumetric medical image (305) comprising at least one organ (309) or portion thereof;
b) receiving a single point of interest (310) within the volumetric medical image (305);
c) sampling voxels (306, 308) from the volumetric medical image (305), wherein at least one voxel (307) is skipped between two sampled voxels (306, 308); and
d) identifying the type of organ (309) at the single point of interest (310) by applying a trained classifier to the sampled voxels (306, 308).

FIG 4

**Description**

The present invention relates to a computer-implemented method for identifying a type of organ in a volumetric medical image, to a device, to a system, to a computer program product and to a computer-readable medium.

Segmentation is one of the core problems in medical imaging. It has been used for identifying organ boundaries, displaying visualizations or volume calculations. One prominent use case is organ identification in the finding location. However, full segmentation of all organs for this purpose is computationally intensive since 3D images could contain up to billions of voxels. Also, the identification of organs in a location of interest does not need full organ segmentation in most cases.

Landmarking is another methodology to identify the organ location information. However, the landmarks do not give the inside outside information of a selected location due to the coarse level of representation.

Recent studies on fine granular organ segmentation reduced computational time burden to a few seconds. Unfortunately, these segmentation approaches still requires additional hardware to be able to run which is not practical in many settings.

It is possible to precompute the segmentations masks before radiology reading session. This process adds complexity on database design, authentication and communication protocols.

Zhang, Fan, Yu Wang, and Hua Yang. "Efficient Context-Aware Network for Abdominal Multi-organ Segmentation." arXiv preprint arXiv:2109.10601 (2021) and Yan, Zhennan, et al. "Bodypart recognition using multistage deep learning." International conference on information processing in medical imaging. Springer, Cham, 2015 describe prior art.

The object of the invention is therefore to provide a method, device and system that enables an improved identification of organs.

According to a first aspect, a computer-implemented method for identifying a type of organ in a volumetric medical image is provided. The method comprises:

> a) receiving a volumetric medical image, the volumetric medical image comprising at least one organ or portion thereof;
> b) receiving a single point of interest within the volumetric medical image;
> c) sampling voxels from the volumetric medical image, wherein at least one voxel is skipped between two sampled voxels; and
> d) identifying the type of organ at the single point of interest by applying a trained classifier to the sampled voxels.

Advantageously, at least one voxel is skipped between two sampled voxels. This has the effect that the amount of data which needs to be processed by the trained classifier to identify the type of organ is reduced, thus reducing computation time and computation resources. Even though the amount of data processed by the trained classifier is reduced, the inventors found that the type of organ can still be identified reliably using the present approach. One reason for this is that the sampled voxels (also referred to as a "descriptor" herein) correspond to a larger field of view, thus also considering neighborhood information, compared to the case where every voxel of a smaller sub volume is sampled.

An organ is to be understood as a collection of tissue joined in a structural unit to serve a common function. The organ may be a human organ. The organ may be any one of the following, for example: intestines, skeleton, kidneys, gall bladder, liver, muscles, arteries, heart, larynx, pharynx, brain, lymph nodes, lungs, spleen bone marrow, stomach, veins, pancreas, and bladder.

The volumetric medical image may be captured by and received from a medical imaging unit, the medical imaging unit may include, for example, but not limited to, a magnetic resonance imaging device, a computer tomography device, an X-ray imaging device, an ultrasound imaging device, etc. The volumetric medical image may be three-dimensional (3D) and/or related to a volume. The volumetric medical image may be made up of a number of slices, i.e., 2D (two-dimensional) medical images. The 2D medical images may be captured by and received from the medical imaging unit mentioned above. The 2D medical images may then be assembled to form the volumetric medical image.

Presently, a voxel represents a value in three-dimensional space, whereas a pixel represents a value in two-dimensional space. The pixels or voxels may or may not have their position, i.e., their coordinates explicitly encoded with their values. Instead, the position of a pixel or voxel is inferred based upon its position relative to other pixels or voxels (i.e., is positioned in the data structure that makes up a single 2D or 3D (volumetric) image). The voxels may be arranged on a 3D grid, the pixels on a 2D grid. The 2D medical image may, for example, be in the form of an array of pixels. The volumetric medical image may comprise an array of voxels. The pixels of a number of 2D medical images making up a volumetric medical image are also presently referred to as voxels. The pixels or voxels may be representative of intensity, absorption or other parameters as a function of a three-dimensional position, and may, for example, be obtained by a suitable processing of measurement signals obtained by one or more of the above-mentioned medical imaging units.

The single point of interest within the volumetric medical image may correspond to one (exactly one) pixel or voxel or the position of said pixel or voxel in a three-dimensional space. The method steps a) to d) may be repeated for different single points of interest, for example to identify different organs within the volumetric medical image.

Sampling of the voxels may be done by reading from a data file, a database, a (e.g., temporary) memory, or an array comprising the voxels. Sampling of the voxels can be done sequentially or in parallel (for example when multiple voxels are read at the same time). At least one voxel is skipped between two sampled voxels. This is to say that, when looking at all the voxels of the volumetric medical image in their three-dimensional relationship, at least one voxel between two sampled voxels is not sampled. For example, the volumetric medical image may comprise a first, second and third voxel arranged in the same row or column. In this case, only the first and third voxel are sampled, the second voxel is not sampled. It may be provided that first the first voxel and then the third voxel is sampled. Alternatively, the first and third voxel are sampled in parallel. The sampled voxels may be saved in memory.

A trained classifier is applied to the sampled voxels. In particular, the sampled voxels are read from memory and then processed by a trained classifier. The trained classifier is, for example, a trained neural network.

In one embodiment, a robot, (e.g., CT or MR) scanner or other device or machine is controlled depending on the identified type of organ (or organ specific abnormality as discussed below). The robot may be configured for operating on a patient's body, for example. In particular, a robot (e.g., an operating instrument thereof such as a scalpel) or scanner movement may be controlled depending on the identified organ.

According to an embodiment, step c) comprises sampling the voxels in a sparse and/or random manner.

"Sparse" is to be understood as, when having regard to the total number of voxels making up the volumetric medical image, only few voxels being used in sparse sampling. In particular, "sparse" is to say that less than 50% or less than 20% or even less than 10% of the total number of voxels of the volumetric medical image are sampled in step c).

"Random" is to say that the sampled voxels do not follow a regular pattern (except that at least one voxel is skipped between two sampled voxels). Still, the (random) pattern used in step c) may be the same for different single points of interest. In some embodiments, a random number generator or pseudorandom number generator may be used to select the voxels sampled in step c).

In an embodiment, step c) comprises sampling the voxels with a sampling rate per unit length, area or volume which decreases with a distance of the respective voxel from the single point of interest.

Thereby, a field of view is obtained, which still focuses on the single point of interest, but at the same time also takes into account information a distance away from the point of interest.

Step c) can be done using a sampling model. The sampling model contains the information about the location of the voxels in the volumetric medical image which are to be sampled, thus providing the descriptor.

The sampling model can be or make use of an algorithm, for example.

According to an embodiment, the sampling rate decreases at a nonlinear rate, in particular at the rate of an exponential, logarithmic or power function.

The inventors found that using a sampling rate as described reduces computation time significantly, while, at the same time, identifying the type of organ reliably.

According to a further embodiment, the sampled voxels are less than 1%, preferably less than 0.1%, and more preferably less than 0.01% of the total number of voxels in the volumetric medical image.

In an embodiment, the trained classifier is a neural network, in particular a multilayer perceptron, a convolutional neural network, a Siamese network or a triplet network.

The difference between classification (using a trained classifier) and segmentation (the latter also usually being carried out using a neural network) is that in classification a single label (for example the type of organ) is output for a single point of interest (for example for a specific voxel), whereas in segmentation a label is determined for each voxel of the input data. Therefore, training and application for classification and segmentation is significantly different.

A simple neural network classifier could be used to classify organ labels using the descriptor at the location of interest. This neural network classifier is not a translation invariant model since the descriptor will change with the changing location.

In one example, the neural network could be a single layer logistic regression. The computation would be softmax of linear combination of descriptor values formulated as:

$$l_{organ} = argmax_l \frac{\exp\left(-W_l^t x\right)}{\sum_i \exp\left(-W_i^t x\right)}$$

where $l_{organ}$ is the organ label, $W_l$ is the weight vectors of different organs and $x$ is the descriptor.

In other examples, a multi-layer neural network could be used to model non-linear relationships. For example, this may be done by adding at least one hidden layer on the input descriptor and adding a softmax classifier layer as in the previous example.

In a further embodiment, the received volumetric medical image or a part thereof comprising the single point of interest is displayed on a graphical user interface, wherein a semantic description of the identified type of organ is generated and displayed at or adjacent to the single point of interest.

In this manner, the user can quickly understand which type of organ is located at the single point of interest.

According to an embodiment, the single point of interest is selected by a user.

For example, the single point of interest can be selected using a graphical user interface and an input device, such as a pointer device, to interact with the graphical user interface to select the single point of interest. In another embodiment, the single point of interest may be input using a keyboard, a data file or the like.

According to a further embodiment the single point of interest is selected by pausing a cursor operated by the user on the volumetric medical image or a part thereof displayed on the graphical user interface.

Since the present classification (step d)) is fast, for example taking less than 10 ms (which may be faster than the screen refresh rate used as part of the graphical user interface), the type of organ, e.g., its semantic description, associated with the single point of interest can be displayed whenever the cursor is paused for a short period of time. "Pausing" here means that the cursor is not moved by the operator. This allows for a quick and efficient analysis of a volumetric medical image by a user, for example a doctor.

According to a further embodiment, when a user takes a measurement with respect to the volumetric medical image or part thereof, the identified type of organ is saved in the database along with the taken measurement.

Oftentimes, a user will take a measurement with respect to the volumetric medical image or a part thereof. For example, a doctor may measure the size of the organ or the size of a lesion or tumor within the organ. This measurement can be performed using a graphical user interface, for example. By having the measurement associated with a specific organ, future reference thereto is simplified and more efficient.

According to a further embodiment, the method further comprises:

receiving a number of untrained classifiers for identifying organ specific abnormalities;
selecting one or more of the untrained classifiers from the number of classifiers depending on the identified organ; and
training the selected one or more untrained classifiers using the volumetric medical image.

There exist classifiers (i.e., neural networks, for example) configured for identifying the type of organ in a volumetric medical image. There also exist classifiers (i.e., neural networks, for example) for identifying organ-specific abnormalities. These organ-specific abnormalities include, for example, nodules, lesions and tumors. Since these organ-specific abnormalities differ substantially with respect to their shape, texture, density etc., it is preferable to train such classifiers for each type of organ respectively. Therefore, the training data used for such organ-specific classifiers needs to be sorted so that, for example, a lung nodule classifier is trained with volumetric medical images showing lungs, a liver lesion classifier is trained with volumetric medical images showing livers, etc. The present method can be used effectively to supply the respective classifiers with suitable volumetric medical images.

According to a further embodiment, the method further comprises performing and/or repeating steps a) to d) for each of N-1 single points of interest within the volumetric medical image, wherein N ≤ the total number of voxels of the volumetric medical image.

Sometimes it is required to determine the type of organ for many single points of interest in a volumetric medical image. To this end, the present method can be performed or repeated many times for different single points of interest. "N" is a positive, real and whole number. The difference here between "performing" and "repeating" is that performing can be done in parallel or otherwise, whereas repeating requires a sequential approach. Typically, the N points of interest will correspond to nodes on a rough grid applied to the volumetric medical image. Put differently, the N single points of interest correspond to a grid with a grid spacing exceeding the spacing of the voxels contained in the volumetric medical image. Preferably, the grid has a regular spacing. In the extreme, however, where N equals the total number of voxels, a similar result as compared to a segmentation method may be obtained. However, with the present approach, all single points of interest are evaluated independent of each other.

Preferably, steps a) to d) are performed in parallel on one or more processing units. Thereby, the processing time can be further reduced.

According to a second aspect, a computer-implemented method for training the above mentioned classifier (step d) above) is provided. The method comprises:

a) receiving a volumetric medical image, the volumetric medical image comprising at least one organ or portion thereof, and receiving the type of the at least one organ;
b) receiving a single point of interest within the volumetric medical image;
c) sampling voxels from the volumetric medical image, wherein at least one voxel is skipped between two sampled voxels;
d) identifying the type of organ at the single point of interest by applying an untrained classifier to the sampled voxels;
e) comparing the identified type of organ with the received type of organ; and
f) modifying the classifier depending on the comparison of step e) to obtain a trained classifier.

The received type of the at least one organ may be stored in a database prior to step a). The type of the at least one organ may be determined by a human studying the volumetric medical images received at step a) prior to step a), or otherwise. Modifying the classifier according to step f) may comprise changing the weights in the neural network of the untrained or partially trained classifier.

According to a third aspect, a device for identifying a type of organ in a volumetric medical image is provided. The device comprises:

one or more processing units;
a first receiving unit which is configured to receive one or more volumetric medical images captured by a medical imaging unit;
a second receiving unit which is configured to receive a single point of interest within the one or more volumetric medical images; and
a memory coupled to the one or more processing units, the memory comprising a module configured to perform the method steps as described above.

The respective unit, for example, the processing or the first or second receiving unit, may be implemented in hardware and/or software. If said unit is implemented in hardware, it may be embodied as a device, for example as a computer or as a processor or as a part of a system, for example a computer system. If said unit is implemented in software, it may be embodied as a computer program, as a function, as a routine, as a program code or as an executable object.

According to a fourth aspect, a system for identifying a type of organ in a volumetric medical image is provided. The system comprises:

one or more servers; and
a medical imaging unit coupled to the one or more servers;

the one or more servers comprising instructions, which when executed cause the one or more servers to perform the method steps as claimed described above.

According to a fifth aspect, a computer program product comprising machine readable instructions, that when executed by one or more processing units cause the one or more processing units to perform method steps as described above.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

According to a sixth aspect, a computer-readable medium on which program code sections of a computer program are saved, the program code sections being loadable into and/or executable in a system to make the system execute the method steps as described above when the program code sections are executed in the system.

The features, advantages and embodiments described with respect to the first aspect equally applies to the second and following aspects, and vice versa.

"A" is to be understood as non-limiting to a single element. Rather, one or more elements may be provided, if not explicitly stated otherwise. Further, "a", "b" etc. in steps a), step b) etc. is not defining a specific order. Rather, the steps may be interchanged as deemed fit by the skilled person.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features, and advantages of the present invention will become apparent from the subsequent description and dependent claims, taken in conjunction with the accompanying drawings, in which:

FIG. 1     illustrates a block diagram of a client-server architecture embodying a system for identifying a type of organ in a volumetric medical image;

FIG. 2     illustrates a block diagram of a data processing system embodying a device for identifying a type or organ in a volumetric medical image;

FIG. 3     illustrates a flowchart of an embodiment of a computer-implemented method for identifying a type of organ in a volumetric medical image;

FIG. 3A     shows an example of a volumetric medical image with some voxels being scanned, others being skipped;

FIG. 4     illustrates a slice from a volumetric medical image and including portions of a location information sampling model according to an embodiment;

FIG. 5     shows different three-dimensional grids used in the definition of the sampling model of FIG. 4;

FIG. 6     shows the sampled intensity values (descriptor) when applying the sampling model of FIG. 4 to the slice of the volumetric medical image also shown in FIG. 4;

FIG. 7     shows a graphical user interfaces according to an embodiment;

FIG. 8     shows a graphical user interface including a measurement;

FIG. 9     shows an embodiment of a database to store findings;

FIG. 10    shows in a schematic view different classifiers used in a federated learning approach according to an embodiment;

FIG. 11    shows a flowchart of a method for training organ-specific classifiers according to an embodiment;

FIG. 12    shows an embodiment of a coarse liver segmentation; and

FIG. 13    shows a flowchart of a computer-implemented method for training a classifier as used herein.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

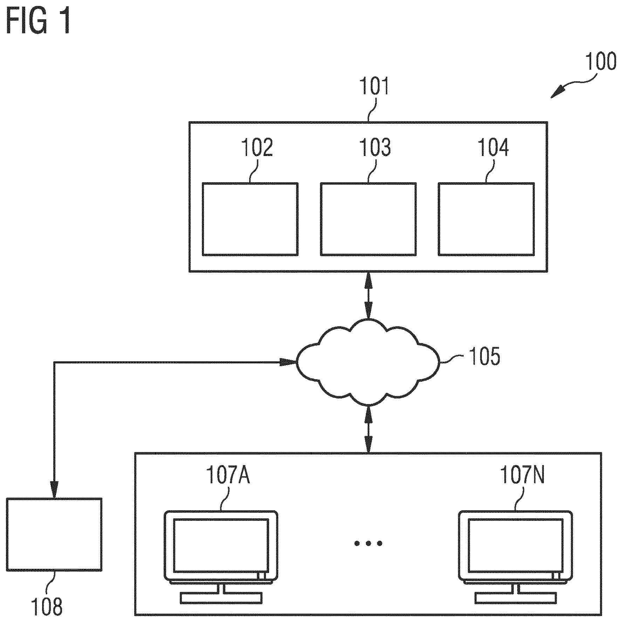

FIG. 1 provides an illustration of a block diagram of a client-server architecture embodying a system for identifying a type of organ in a volumetric medical image. The client-server architecture 100 comprises a server 101 and a plurality of client devices 107A-N. Each of the client devices 107A-N is connected to the server 101 via a network 105, for example, local area network (LAN), wide area network (WAN), WiFi, etc. In one embodiment, the server 101 is deployed in a cloud computing environment. As used herein, "cloud computing environment" refers to a processing environment comprising configurable computing physical and logical resources, for example, networks, servers, storage, applications, services, etc., and data distributed over the network 105, for example, the internet. The cloud computing environment provides on-demand network access to a shared pool of the configurable computing physical and logical resources. The server 101 may include a medical database 102 that comprises medical images related to a plurality of patients that is maintained by a healthcare service provider. In an embodiment, the medical database 102 comprises volumetric medical images captured by a MR scanner and/or by a CT scanner. The server 101 may include a module 103 that is configured to perform identifying a type of organ in a volumetric medical image, in particular as described hereinafter.

The client devices 107A-N are user devices, used by users, for example, medical personnel such as a radiologist, pathologist, physician, etc. In an embodiment, the user device 107A-N may be used by the user to receive volumetric or 2D medical images associated with the patient. The data can be accessed by the user via a graphical user interface of an end user web application on the user device 107A-N. In another embodiment, a request may be sent to the server 101 to access the medical images associated with the patient via the network 105.

An imaging unit 108 may be connected to the server 101 through the network 105. The unit 108 may be a medical imaging unit 108 capable of acquiring a plurality of volumetric medical images. The medical imaging unit 108 may be, for example, a scanner unit such as a magnetic resonance imaging unit, computed tomography imaging unit, an X-ray fluoroscopy imaging unit, an ultrasound imaging unit, etc.

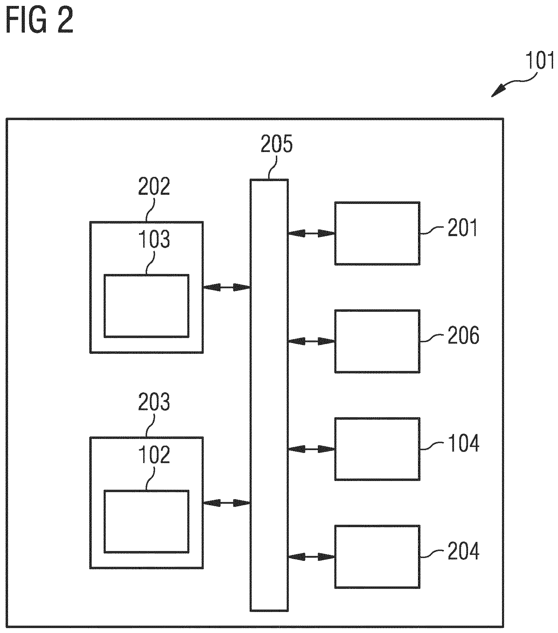

FIG. 2 is a block diagram of a data processing system 101 in which an embodiment can be implemented, for example, as a system 101 for identifying a type of organ in a volumetric medical image, configured to perform the processes as described herein. It is appreciated that the server 101 is an exemplary implementation of the system in FIG. 2. In FIG. 2, said data processing system 101 comprises a processing unit 201, a memory 202, a storage unit 203, an input unit 204, an output unit 206, a bus 205, and a network interface 104.

The processing unit 201, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 101 may also include embedded controllers, such as generic or programmable logic devices or arrays, application specific integrated circuits, single-chip computers, and the like.

The memory 202 may be volatile memory and non-volatile memory. The memory 202 may be coupled for communication with said processing unit 201. The processing unit 201 may execute instructions and/or code stored in the memory 202. A variety of computer-readable storage media may be stored in and accessed from said memory 202. The memory 202 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 201 comprises a module 103 stored in the form of machine-readable instructions on any of said above-mentioned storage media and may be in communication to and executed by processing unit 201. When executed by the processing unit 201, the module 103 causes the processing unit 201 to identify a type of organ in a volumetric medical image. Method steps executed by the processing unit 201 to achieve the abovementioned functionality are elaborated upon in detail in the following figures.

The storage unit 203 may be a non-transitory storage medium which stores the medical database 102. The input unit 204 may include input means such as keypad, touch-sensitive display, camera (such as a camera receiving gesture-based inputs), a port etc. capable of providing input signal such as a mouse input signal or a camera input signal. The bus 205 acts as interconnect between the processor 201, the memory 202, the storage unit 203, the input unit 204, the output unit 206 and the network interface 104. The volumetric medical images may be read into the medical database 102 via the network interface 104 or the input unit 204, for example.

Those of ordinary skilled in the art will appreciate that said hardware depicted in FIG. 1 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition or in place of the hardware depicted. Said depicted example is provided for the purpose of explanation only and is not meant to imply architectural limitations with respect to the present disclosure.

A data processing system 101 in accordance with an embodiment of the present disclosure may comprise an operating system employing a graphical user interface (GUI). Said operating system permits multiple display windows to be presented in the graphical user interface simultaneously with each display window providing an interface to a different application or to a different instance of the same application. A cursor in said graphical user interface may be manipulated by a user through a pointing device. The position of the cursor may be changed and/or an event such as clicking a mouse button, generated to actuate a desired response.

One of various commercial operating systems, such as a version of Microsoft Windows™, a product of Microsoft Corporation located in Redmond, Washington may be employed if suitably modified. Said operating system is modified or created in accordance with the present disclosure as described. Disclosed embodiments provide systems and methods for processing medical images.

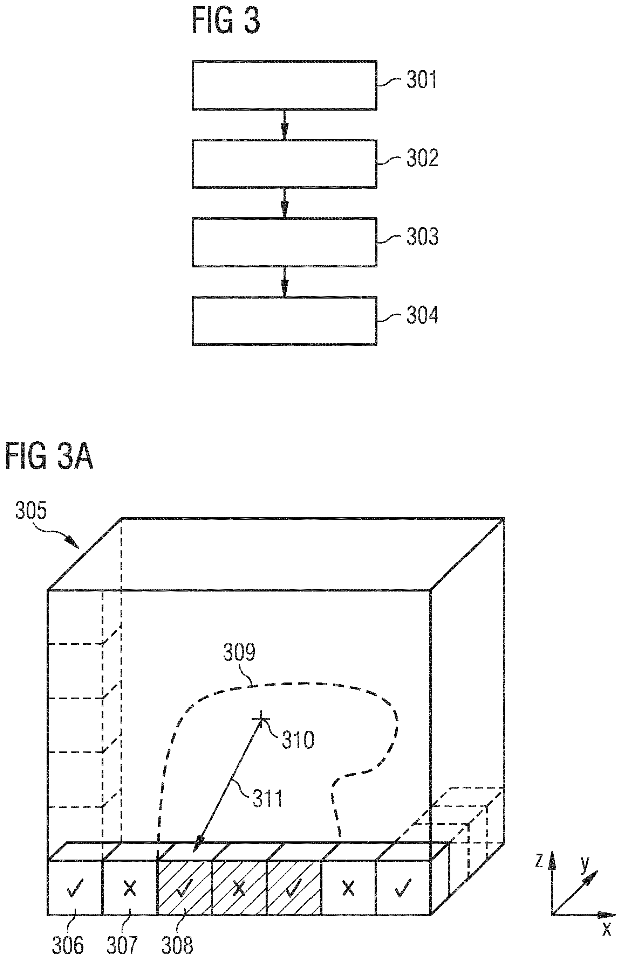

FIG. 3 illustrates a flowchart of an embodiment of a method for identifying a type of organ in a volumetric medical image.

In step 305, a volumetric medical image 305 (see FIG. 3A below) is received. The volumetric medical image 305 is, for example, received in the data processing systems 101 through the network interface 104 or the input unit 203.

The volumetric medical image 305 as shown in FIG. 3A is comprised of a three-dimensional array of voxels 306, 307, 308. This array is illustrated in FIG. 3A as a cuboid seen in a perspective view. The cuboid comprises rows and columns of voxel 306, 307, 308 extending in all three dimensions x, y, z. To make FIG. 3A more readable, only some of the voxels 306, 307, 308 within the cuboid are shown.

Instead of the three-dimensional array, the method explained herein may also use a number of slices (two-dimensional arrays of pixels) which, taken together, describe a (three-dimensional) volume. In fact, any other data structure may be used comprising values, such as intensities, and describing a three-dimensional space. Any such value is termed a "voxel" herein. The value may be combined with information describing its three-dimensional relationship with respect to other values, or the three-dimensional relationship can be inferred from the data structure, or any other source.

The volumetric medical image 305 comprises at least one organ 309 or a portion thereof. In the example of FIG. 3A, a portion of an organ 309, for example lungs or kidney, is represented by hashed voxels 308 in the volumetric medical image 305.

In step 302, a single point of interest 310 within the volumetric medical image is received. As will be explained in more detail later, the single point of interest 310 may be selected by a user, for example, through a graphical user interface using a pointer device, such as a mouse. The single point of interest 310 may be received, for example, through the network interface 104 or the input unit 204 (see FIG. 2).

The single point of interest 310 is a point in the volumetric medical image for which it is desired to identify the type of organ 309 corresponding to said point. Said single point of interest 310 may be described through coordinates in x, y, z and may correspond to a specific voxel in the cuboid. If, for example, a mouse is used to select the single point of interest 310, the coordinates of the mouse cursor, once the selection of the single point of interest 310 is done, for example by clicking or pausing the cursor over the image, said coordinates x, y, z are transmitted, for example, via the input unit 204 to the data processing system 101.

In step 303, voxels 306, 308 are sampled from the volumetric medical image 305. To this end, for example, the module 103 (see FIG. 2) reads voxels 306, 308 from the volumetric medical image 305 contained in the database 102. At least one voxel 307 is skipped between two sampled voxels 306, 308. In FIG. 3A, the sampled voxels are designated with a tick, whereas skipped or not sampled voxels are designated with a cross. In the embodiment of FIG. 3A, in the row of voxels defined by adjacent voxels 306, 307, 308 only every second voxel 306, 308 is sampled. The voxels 306, 308 may be sampled sequentially or in parallel.

To define which voxels are sampled and which are not, the module 103 may comprise a corresponding sampling model which may be an algorithm or another type of code. Alternatively, the sampling model can be defined by the user via the input unit 204 or supplied via the network interface 104.

In embodiments of step 303, the voxels 306, 308 are sampled in a sparse manner. That is to say that the number of voxels sampled in the volumetric medical image 305 is less than the total number of voxels contained in the volumetric medical image. In particular, the number of sample voxels may be less than 50%, less than 20% or less than 10% of the total number of voxels to be considered sparse. In one embodiment, the sampled voxels 306, 308 are less than 1%, preferably less than 0.1% and more preferably less than 0.01% of the total number of voxels in the volumetric medical image 305.

Additionally, the voxels may be sampled in a random manner (except for at least one voxel being skipped between two sampled voxels). For example, a random number generator or pseudonumber random generator may be used to identify voxels 306, 307, 308 in the volumetric medical image 305 which are to be sampled and others which are not sampled. For example, such a random number generator or pseudorandom number generator may be part of a sampling model or may be used to provide a sampling model as described above.

In particular, the inventors found that it is beneficial if the voxels 306, 308 are sampled in step 303 with a sampling rate per unit length, area or volume which decreases with a distance 311 from the single point of interest 310. It was found that results improve even more, when the sampling rate decreases at a nonlinear rate, in particular at the rate of an exponential, logarithmic or power function.

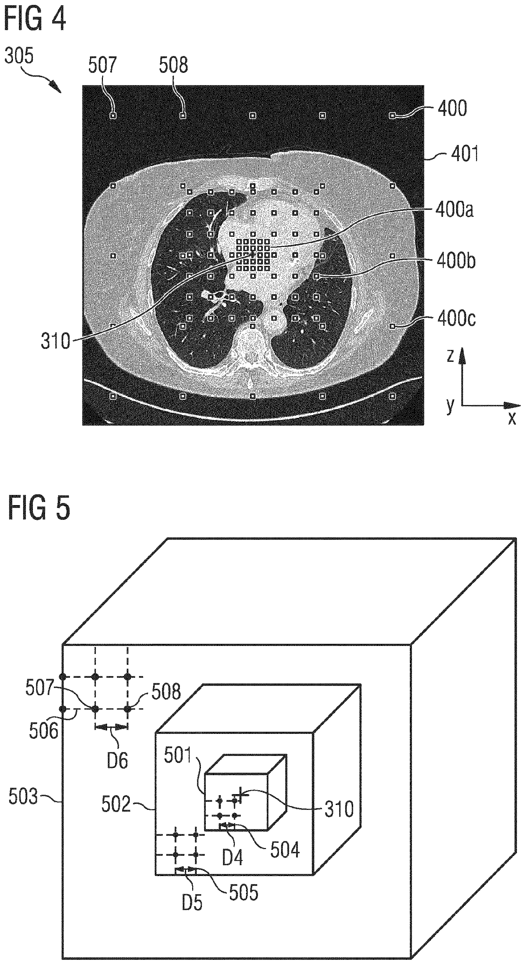

In this regard, it is referred to FIGS. 4 and 5 which show an example of a sparse sampling model 400 (only some of the points of the sampling model 400 have been marked with reference numeral 400a, 400b, 400c for reasons of readability of the Figure) in a 2D slice 401 taken from a volumetric medical image 305. The sampling model 400 is designed to provide for a sparse sampling with a sampling rate per unit volume which decreases with a distance in the x-, y- and z-direction.

Since FIG. 4 shows a 2D image, the y-direction which corresponds to the depth normal to the plane of the image shown in FIG. 4 is not illustrated but corresponds to the sampling rate shown for the directions x and z in FIG. 4.

FIG. 5 illustrates three 3D grids of different grid spacings used in the definition of the sampling model 400 of FIG. 4, for example. The cubes (or cuboids) are designated 501, 502 and 503. The cubes 501, 502, 503 are nested within each other, with the smallest cube 501 containing, for example at its center, the single point of interest 310. Each cube contains a grid, respectively. The cube 501 contains a grid 504, the cube 502 a grid 505 and the cube 503 a grid 506. The grids 504, 505, 506 may have a regular spacing defining cubes or cuboids within. For illustration purposes, the grids 504, 505, 506 are only shown in 2D (i.e., in the plane of the paper) and only partially. The grid spacing is defined as the distance between two adjacent nodes of the respective grid. Any node is defined as the intersection of three grid lines. As shown in more detail for grid 506, two nodes 507, 508 are a distance $D_6$ apart. Similarly, the grid spacing of the grid 504 is defined by a distance $D_4$, and the grid spacing of the grid 505 is defined by a distance $D_5$.

In the experiment made by the inventors, $D_4$ was selected 8 mm, $D_5$ 20 mm and $D_6$ 80 mm. The nodes 507, 508 considered were only those nodes within the volume of each cube (or cuboids) minus the volume of the largest cube (or cuboid) nested inside said cube. For example, for cube 503, the nodes 507, 508 were considered inside the volume of the cube 503 which were not lying in the volume of the cube 502.

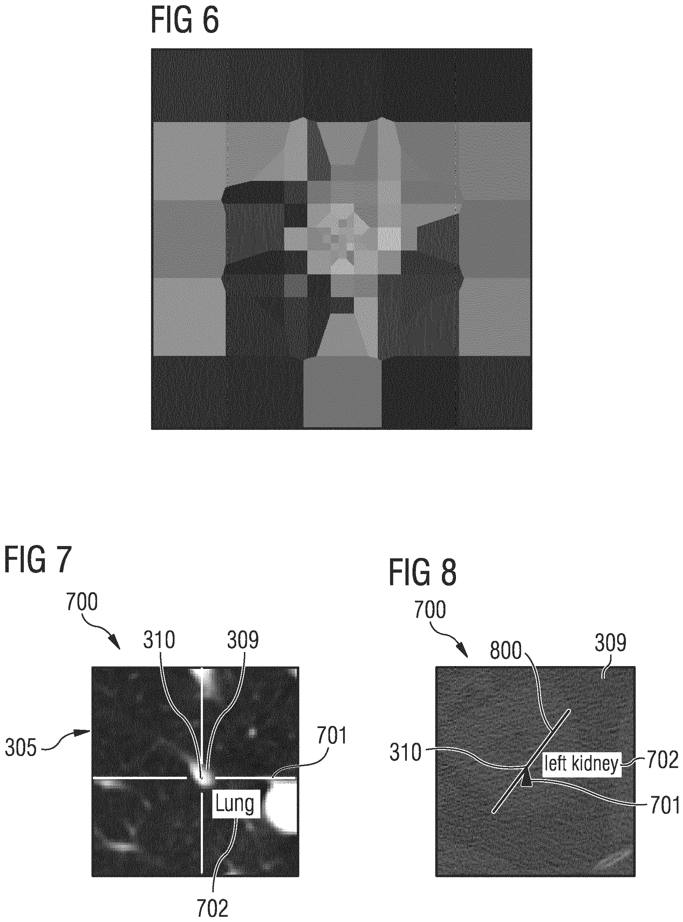

The nodes 507, 508 define the sampling model 400 and thus define the voxels 306, 308 (see FIG. 3A) sampled in the volumetric medical image 305. Thus, when sampling the volumetric medical image 305 with the sampling model 400, 1,195 voxels were sampled (that is, for example, their intensity values read from the database 102), whereas the total number of voxels in the volumetric medical image was 25,000,000. Thus, less than 0.1% of the total number of voxels were sampled. The voxels sampled in the slice of FIG. 4 put together in an image are shown in FIG. 6.

When turning to FIG. 3, a step 304 is shown in which the type of organ 309 is identified at the single point of interest 310 by applying a trained classifier to the sampled voxels 306, 308. The trained classifier is a neural network, in particular a multiplayer perceptron, a convolutional neural network, a Siamese network or a triplet network.

FIGS. 4 and 5 illustrate the effectiveness of the method as devised by the inventors.

Initially, for comparison purposes, a segmentation may be used to find the labels (the type of organ) for each of the voxels of the volumetric medical image 305 of which FIG. 4 shows a 2D slice. In particular, a U-Net segmentation algorithm may be used. U-Net is a convolutional neural network that was developed for biomedical image segmentation at the computer science department of the University of Freiburg. The segmentation typically takes 10 s [seconds] as described in Hatamizadeh, Ali et al. "UNETR: Transformers for 3D Medical Image Segmentation." arXiv:2103.10504v3 (2021).

On the other hand, using the trained classifier with the descriptor (derived using the sampling model 400), finding the label (i.e., the type of organ) at the single point of interest 310 only took 10 ms as determined in experiments by the inventors. The trained classifier used in this experiment was a ResNet (Residual Neural Network) classifier. ResNet uses a very deep feed-forward neural network with hundreds of layers.

When the inventors applied the ResNet classifier in the classical way, i.e., by sampling the total number of voxels in the volumetric medical image 305, and solving for the label (the type of organ) at the single point of interest 410, data processing took around 1 s.

FIG. 7 shows in an embodiment a portion of a graphical user interface 700 as for example displayed on one of the client devices 107A-N. In FIG. 7, the graphical user interface 700 shows a slice of a volumetric medical image 305 displaying a mouse cursor 701 paused over a portion of an organ 309. By pausing the cursor 701 over the volumetric medical image 305 for a predetermined amount of time, the user selects a single point of interest 310 in the volumetric medical image 305. The corresponding coordinates of the single point of interest 310 are thus transmitted to, for example, the module 103 (see FIG. 2) and the module 103 determines, by executing the steps 301 to 304, which type of organ the single point of interest 310 corresponds to.

In the example, it is found that the organ 309 is lung. Thus, the module 103 or another piece of software and/or hardware generates a semantic description, for example "lung", which is then displayed at or adjacent (as in the example of FIG. 7) to the single point of interest 310.

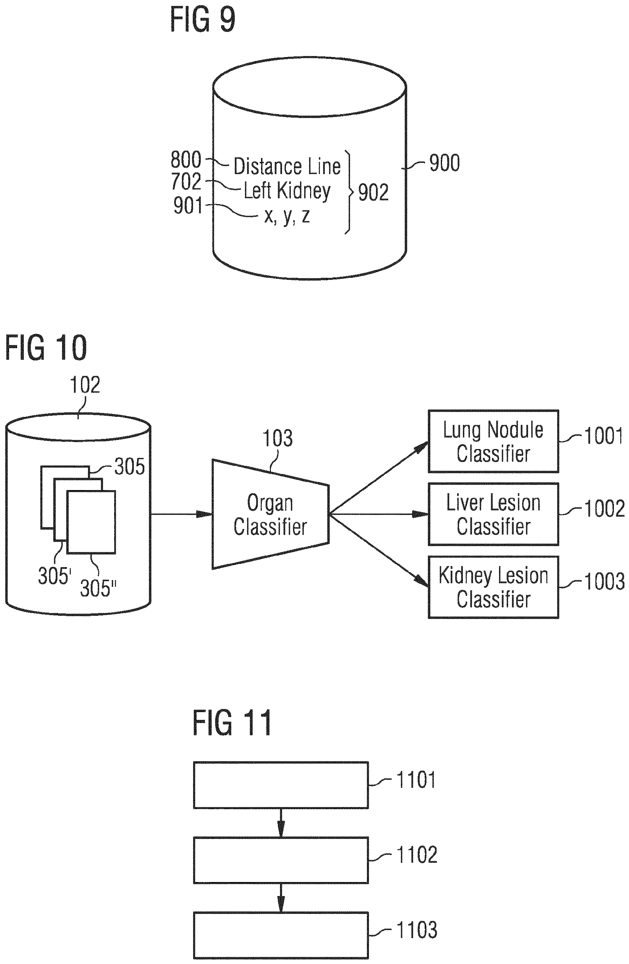

In FIG. 8, the user takes a measurement 800 using the graphical user interface 700 on an organ 309 that has been identified to be "left kidney" for the single point of interest 310 using the method steps 301 to 304, for example. For example, a measurement 800 is taken such as the size of a tumor, the size of the organ 309 or the like. The module 103 or any other software and/or hardware may be configured to store the measurement 800 (in the present case the length indicated by the distance line, for example 40 mm) along with the label (type of organ found at the single point of interest 310 associated with the measurement 800) in a database 900 shown in Fig. 9. The database 900 may be as well stored in the memory 203 (see FIG. 2). In the database 900, a number of measurements 800 along with the semantic label 702 and the coordinates 901 (x, y, z) of the corresponding single point of interest 310 are stored. The information 800, 702, 901 may be stored in an array 902. Multiple arrays 902 may be stored in the database 900.

FIG. 10 illustrates an application of the method explained in FIG. 3 to federated learning. The database 102 stores multiple volumetric medical images 305. The module 103 identifies, in one embodiment, using a predefined single point of interest in each image 305 and a predefined classifier 400, the type of organ 309 shown in each image 305. Depending on the type of organ identified, the module 103 provides the image 305 which is found to show lung to the lung nodule classifier 1001. The image 305' that is found to show liver is provided to the liver lesion classifier 1002. The image 305" which is found to show kidney is provided to the kidney lesion classifier 1003.

In particular, the method for federated learning may be implemented as shown in FIG. 11.

Initially, untrained classifiers 1001 to 1003 are received, for example by the module 103 (step 1101). The untrained classifiers 1001 to 1003 are configured to, when trained, identify organ-specific abnormalities. For example, the lung nodule classifier 1001 is, when trained, configured to detect nodules in lung. Similarly, the lesion classifier 1002 is, when trained, configured to detect lesions and liver and so on.

In step 1102, the module 103 selects from the untrained classifiers 1001 to 1003 those that correspond to the specific organ identified in step 304 (see FIG. 3) in a volumetric medical image 305.

In step 1103, the untrained classifiers 1001 to 1003 are trained using the volumetric medical image 305 showing the corresponding organ.

For training, the organ-specific abnormality must be known for each volumetric medical image 305. Such information is, preferably, also stored in a database 102 and used during the training step 1102.

Advantageously, in the methods of FIG. 10 and 11, the classifier of step 304 can be used as a gating mechanism to direct incoming data (volumetric medical images 305 in particular) to the correct organ-specific classifier 1001 to 1003. Thus, no full segmentation is required to train the classifiers 1001 to 1003 effectively. This gating mechanism may be used for training the classifiers 1001 to 1003, but also at the application stage. Further, the method of FIG. 3 can be applied to multiple single points of interest 310 in the same volumetric medical image 305. In a case where multiple organs are identified in the same volumetric medical image 305, such volumetric medical images can be portioned or divided into different sub images, each showing one organ 309. The sub images can then be used to train the organ-specific classifiers 1001 to 1003: When the organ identified in the sub image corresponds to the organ for which the classifier 1001 to 1003 is specific for, the respective classifier 1001 to 1003 is trained on that image.

At the application stage, a trained organ-specific classifier 1001 to 1003 is selected, for example by the module 103 in a process step following step 304, based on the identified organ, and then the trained organ-specific 1001 to 1003 is applied to the volumetric medical image 305 or sub image. Thus, the above-described method is not only suitable to identify the type of organ, but also to identify a specific abnormality within an organ.

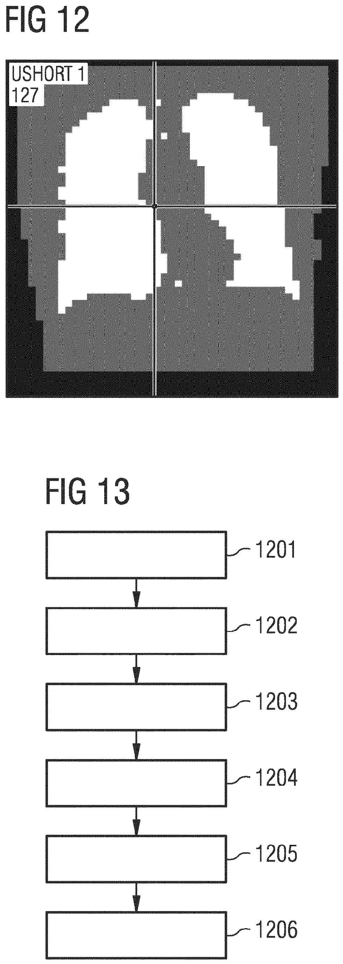

FIG. 12 shows an embodiment where the steps 301 to 304 (see FIG. 3) are carried out for N single points of interest within a volumetric medical image 305. For example, a coarse grid is chosen such as the grid 506 in FIG. 5 (grids 504 and 505 are not present in this example, but the grid 506 fills the entire volume of cube 503). Each node 507, 508 is selected as a respective single point of interest 310. Then, for example, using the same sampling model 400 (however, possibly moving the sampling model such that the single point of interest 310 remains at the center of the sampling model 400 when applied to the volumetric medical image 305), voxels 306, 308 are sampled. As a result, the type of organ 309 at each point of interest 507, 508 is identified at the respective step 304. The steps 301 to 304 may be carried out in parallel for each node 507, 508 or consecutively. The grid spacing, i.e., the distance $D_6$ (see FIG. 5) is chosen larger than the spacing of two adjacent voxels 305, 306, 307 in the volumetric medical image 305. As a result, a coarse level segmentation as shown in FIG. 12 is obtained. Still, no segmentation neural network as such is used, but a classifier is applied to obtain this coarse level segmentation. In the example of FIG. 12, the distance $D_6$ (see FIG. 5) equals 1 cm (resolution). Obtaining the segmentation as shown in FIG. 12 took only 0.41 s on CPU hardware without any extra pre-processing steps.

FIG. 13 shows an embodiment of a method for training the classifier used in step 304 (see FIG. 4).

In step 1201, a volumetric medical image 305 is received along with an identifier (label) identifying the type of the at least one organ 309 shown in the volumetric medical image 305. The identifier may correspond to the semantic label 702 referred to in FIGS. 7 and 8 or may have any other suitable form. The identifier may be obtained by applying a full segmentation to the volumetric medical image 305 prior to step 1201, thus providing an identifier for every voxel in the image 305.

In step 1202, a single point of interest 310 within the volumetric medical image 305 is received. For training purposes, the single point of interest may be predetermined or randomly generated, for example.

In step 1203, voxels are sampled from the volumetric medical image 305, wherein at least one voxel 307 is skipped between two sampled voxels 306, 308.

In step 1204, the type of organ 309 at the single point of interest 310 is identified by applying an untrained classifier to the sampled voxels 306, 308.

The features, advantages and explanations given in respect of the method of FIG. 3 equally applied to steps 1201 to 1204. In particular, the sampling in step 1203 may be carried out using a sampling model 400 as describe above, thus speeding up the training process, and making it reliable at the same time.

In step 1205, the identified type of organ 309 is compared with the received type of organ.

In step 1206, the classifier is modified depending on the comparison. For example, weights are adapted in the classifier to provide a trained classifier. Steps 1201 to 1206 may be repeated for different volumetric medical images 305 until the classifier has been fully trained. The steps 1201 to 1206 may be carried out using the device 101 or system 100 described in FIGS. 1 and 2. In particular, a module 103 or any other hardware and/or software may be used to carry out the steps 1201 to 1206.

The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein, rather, the invention extends to all functionally equivalent structures, methods and uses, such as are within the scope of the appended claims. Those skilled in the art, having the benefit of the teachings of this specification, may effect numerous modifications thereto and changes may be made without departing from the scope and spirit of the invention in its aspects.

REFRENCE SIGNS

| | |
|---|---|
| 100 | system |
| 101 | computer-implemented device |
| 102 | medical database |
| 103 | module |
| 104 | network interface |
| 105 | network |
| 107A - 107N | client device |
| 108 | medical imaging unit |
| 201 | processing unit |
| 202 | memory |
| 203 | storage unit |
| 204 | input unit |
| 205 | bus |
| 206 | output unit |
| 301-304 | method steps |
| 305 | volumetric medical image |
| 305' | volumetric medical image |
| 305" | volumetric medical image |
| 306 - 308 | voxels |
| 309 | organ |
| 310 | single point of interest |
| 311 | distance |
| x, y, z | orthogonal directions in space |
| 400 | sampling model |
| 400a - 400c | points |
| 401 | slice |
| 501 -503 | cubes |
| 504 - 506 | grids |
| 507,508 | nodes |
| $D_4$, $D_5$, $D_6$ | distances |
| 700 | HMI |
| 701 | cursor |
| 702 | label |
| 800 | measurement line |
| 900 | database |
| 901 | coordinates |
| 902 | array |
| 1001 - 1003 | classifier |
| 1101 - 1103 | method steps |
| 1201 - 1206 | method steps |

**Claims**

1. A computer-implemented method for identifying a type of organ (309) in a volumetric medical image (305), the method comprising:

a) receiving a volumetric medical image (305), the volumetric medical image (305) comprising at least one organ (309) or portion thereof;
b) receiving a single point of interest (310) within the volumetric medical image (305);
c) sampling voxels (306, 308) from the volumetric medical image (305), wherein at least one voxel (307) is skipped between two sampled voxels (306, 308); and
d) identifying the type of organ (309) at the single point of interest (310) by applying a trained classifier to the sampled voxels (306, 308).

2. The method of claim 1,
wherein step c) comprises sampling the voxels (306, 308) in a sparse and/or random manner.

3. The method of claim 1 or 2,
wherein step c) comprises sampling the voxels (306, 308) with a sampling rate per unit length, area or volume which decreases with a distance (311) of the respective voxel (306, 308) from the single point of interest (310).

4. The method of claim 3,
wherein the sampling rate decreases at a non-linear rate, in particular at the rate of an exponential, logarithmic or power function.

5. The method of one of claims 1 to 4,
wherein the sampled voxels (306, 308) are less than 1 %, preferably less than 0,1 %, and more preferably less than 0,01 % of the total number of voxels (306, 307, 308) in the volumetric medical image (305).

6. The method of one of claims 1 to 5,
wherein the trained classifier is a neural network, in particular a multilayer perceptron, a convolutional neural network, a Siamese network or a triplet network.

7. The method of one of claims 1 to 6,
wherein the volumetric medical image (305) or a part thereof comprising the single point of interest (310) is displayed on a graphical user interface (700), wherein a semantic description (702) of the identified type of organ (309) is generated and displayed at or adjacent to the single point of interest (310).

8. The method of one of claims 1 to 7,
wherein:

the single point of interest (310) is selected by a user; and/or
the single point of interest (310) is selected by pausing a cursor (701) operated by the user on the volumetric medical image (305) or a part thereof displayed on a graphical user interface (700); and/or
when a user takes a measurement (800) with respect to the volumetric medical image (305) or a part thereof, the identified type of organ (309) is saved in a database (900) along with the taken measurement (800).

9. The method of one of claims 1 to 8, comprising:

receiving a number of untrained classifiers (1001 - 1003) for identifying organ specific abnormalities;
selecting one or more of the untrained classifiers (1001 - 1003) from the number of classifiers depending on the identified organ (309); and
training the selected one or more untrained classifiers (1001 - 1003) using the volumetric medical image (305).

10. The method of one of claims 1 to 9,

comprising performing and/or repeating steps a) to d) for each of N-1 single points of interest (310) within the volumetric medical image (305), wherein N ≤ the total number of voxels (306, 307, 308) of the volumetric medical image (305); wherein, preferably, steps a) to d) are performed in parallel on one or more processing units (201); and/or
wherein, preferably, the N single points of interest (310) correspond to a grid (506) with a grid spacing ($D_6$) exceeding the spacing of the voxels (306, 307, 308) contained in the volumetric medical image (305).

11. A computer-implemented method for training the classifier of one of claims 1 to 10, the method comprising:

a) receiving a volumetric medical image (305), the volumetric medical image comprising at least one organ (309) or portion thereof, and receiving the type of the at least one organ (309);
b) receiving a single point of interest (310) within the volumetric medical image (305);
c) sampling voxels (306, 308) from the volumetric medical image (305), wherein at least one voxel (307) is skipped between two sampled voxels (306, 308);
d) identifying the type of organ (309) at the single point of interest (310) by applying an untrained classifier to the sampled voxels (306, 308);
e) comparing the identified type of organ (309) with the received type of the at least one organ; and

f) modifying the classifier depending on the comparison of step e) to obtain a trained classifier.

**12.** A device (101) for identifying a type of organ (309) in a volumetric medical image (305), the device (101) comprising:

one or more processing units (201);
a first receiving unit (104, 204) which is configured to receive one or more volumetric medical images (305) captured by a medical imaging unit (108);
a second receiving unit (104, 204) which is configured to receive a single point of interest (310) within the one or more volumetric medical images (305); and
a memory (202) coupled to the one or more processing units (201), the memory (202) comprising a module (103) configured to perform the method steps as claimed in any one of claims 1 to 11.

**13.** A system (100) for identifying a type of organ (309) in a volumetric medical image (305), the system (100) comprising:

one or more servers (101); and
a medical imaging unit (108) coupled to the one or more servers (101);

the one or more servers (101) comprising instructions, which when executed cause the one or more servers (101) to perform the method steps as claimed in any one of claims 1 to 11.

**14.** A computer program product comprising machine readable instructions, that when executed by one or more processing units (201), cause the one or more processing units (201) to perform method steps according to claims 1 to 11.

**15.** A computer readable medium on which program code sections of a computer program are saved, the program code sections being loadable into and/or executable in a system (100) to make the system (100) execute the method steps according to any one of the claims 1 to 11 when the program code sections are executed in the system (100).

FIG 1

## FIG 2

## FIG 3

301

302

303

304

## FIG 3A

305

309

310

311

306  307  308

z  y

x

## FIG 4

## FIG 5

# FIG 6

# FIG 7

# FIG 8

## FIG 9

800 — Distance Line
702 — Left Kidney  } 902
901 — x, y, z

900

## FIG 10

102

305
305'  305"

103
Organ
Classifier

Lung Nodule
Classifier — 1001

Liver Lesion
Classifier — 1002

Kidney Lesion
Classifier — 1003

## FIG 11

1101

1102

1103

# FIG 12

USHORT 1
127

# FIG 13

1201

1202

1203

1204

1205

1206

Europäisches
Patentamt

European
Patent Office

Office européen
des brevets

**EUROPEAN SEARCH REPORT**

Application Number

EP 22 18 2378

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YUEYUE WANG ET AL: "Organ at Risk Segmentation in Head and Neck CT Images by Using a Two-Stage Segmentation Framework Based on 3D U-Net", ARXIV.ORG, CORNELL UNIVERSITY LIBRARY, 201 OLIN LIBRARY CORNELL UNIVERSITY ITHACA, NY 14853, 25 August 2018 (2018-08-25), XP081507851, | 1,2,5-7, 10-15 | INV. G06V10/764 G06V10/82 G06V10/22 G06T7/00 |
| A | * abstract * * figure 2 * * section II.B * * section III.B * | 3,4,8,9 | |
| A | NATHAN LAY ET AL: "Rapid Multi-organ Segmentation Using Context Integration and Discriminative Models", 28 June 2013 (2013-06-28), INFORMATION PROCESSING IN MEDICAL IMAGING, SPRINGER BERLIN HEIDELBERG, BERLIN, HEIDELBERG, PAGE(S) 450 - 462, XP047033320, ISBN: 978-3-642-38867-5 * the whole document * | 1-15 | |
| | | | TECHNICAL FIELDS SEARCHED (IPC) |
| A | US 2021/183070 A1 (LAAKSONEN HANNU MIKAEL [FI] ET AL) 17 June 2021 (2021-06-17) * the whole document * | 1-15 | G06V G06T |
| A | US 2018/089530 A1 (LIU DAVID [US] ET AL) 29 March 2018 (2018-03-29) * the whole document * | 1-15 | |
| A | US 2011/007954 A1 (SUEHLING MICHAEL [US] ET AL) 13 January 2011 (2011-01-13) * the whole document * | 1-15 | |

The present search report has been drawn up for all claims

| Place of search | Date of completion of the search | Examiner |
|---|---|---|
| The Hague | 30 November 2022 | Martinez, Francis |

EPO FORM 1503 03.82 (P04C01)

## ANNEX TO THE EUROPEAN SEARCH REPORT
## ON EUROPEAN PATENT APPLICATION NO.

EP 22 18 2378

30-11-2022

| Patent document cited in search report | | Publication date | Patent family member(s) | | Publication date |
|---|---|---|---|---|---|
| US 2021183070 | A1 | 17-06-2021 | CN | 115104124 A | 23-09-2022 |
| | | | EP | 4078515 A1 | 26-10-2022 |
| | | | US | 2021183070 A1 | 17-06-2021 |
| | | | WO | 2021122172 A1 | 24-06-2021 |
| US 2018089530 | A1 | 29-03-2018 | CN | 107636659 A | 26-01-2018 |
| | | | EP | 3295374 A1 | 21-03-2018 |
| | | | US | 2018089530 A1 | 29-03-2018 |
| | | | WO | 2016182551 A1 | 17-11-2016 |
| US 2011007954 | A1 | 13-01-2011 | NONE | | |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG, FAN ; YU WANG ; HUA YANG.** Efficient Context-Aware Network for Abdominal Multi-organ Segmentation. *arXiv:2109.10601,* 2021
- Bodypart recognition using multi-stage deep learning. **YAN, ZHENNAN et al.** International conference on information processing in medical imaging. Springer, 2015
- **HATAMIZADEH, ALI et al.** UNETR: Transformers for 3D Medical Image Segmentation. *arXiv:2103.10504v3,* 2021